# EUROPEAN PATENT APPLICATION

(11) **EP 1 650 959 A2**
(43) Date of publication of application: **26.04.2006**
(21) Application number: 05109693.1
(22) Date of filing: 18.10.2005
(51) Int. Cl.: H04N 5/232, H04N 5/225

(54) **Camera with Wireless Communication Function**

(30) Priority: 21.10.2004 JP 2004306954
(71) Applicant: NIKON CORPORATION, Tokyo 100-8331 (JP)
(72) Inventor: KAWAMURA, Tomoaki, 100-8331, Chiyoda-ku (JP)
(74) Representative: Walaski, Jan Filip

(57) **Abstract**

A camera is equipped with a wireless communication function for executing wireless communication by employing a wireless communication device which includes an antenna. The camera includes an antenna cover that moves to one of an open state in which the antenna is exposed to an outside and a closed state in which the antenna is concealed; and a control device that enables the wireless communication by the wireless communication device by interlocking with movement of the antenna cover to the open state and disables the wireless communication by interlocking with movement of the antenna cover to the closed state.

## Description

The present invention relates to a camera equipped with a wireless communication function.

US Patent Application Publication No. 2003/0112345 discloses a digital camera having preinstalled therein a wireless communication unit and capable of transmitting a photographed image through wireless communication. The image thus transmitted may be received and saved at an external apparatus such as a personal computer. Wireless communication may be achieved by mounting a separate wireless communication unit at the camera, instead. It is desirable to expose the antenna of the wireless communication unit on the outside of the camera body in order to assure a reliable communication link.

However, the presence of the antenna projecting out of the camera body at all times compromises the appearance of the camera and there is also the risk of the antenna being subjected to an external force and becoming damaged.

A camera equipped with a wireless communication function for executing wireless communication by employing a wireless communication means which includes an antenna, according to the present invention includes an antenna cover that moves to one of an open state in which the antenna is exposed to an outside and a closed state in which the antenna is concealed; and a control means for enabling the wireless communication by the wireless communication means in response to movement of the antenna cover to the open state and disabling the wireless communication in response to movement of the antenna cover to the closed state.

The camera may further include a photographic lens. It is preferable that when the antenna cover is in the open state, the antenna and the photographic lens are exposed, whereas when the antenna cover is in the closed state, the antenna and the photographic lens are concealed. The control means may turn on power to the camera in response to the movement of the antenna cover into the open state so as to enable a photographing operation executed by using the photographic lens in addition to the wireless communication, and the control means may turn off the power to the camera in response to the movement of the antenna cover into the closed state so as to disable the wireless communication and the photographing operation.

The antenna cover may move to a partially open state in which the antenna is exposed while the photographic lens remains concealed, between the open state and the closed state; and it is preferable that the control means enables the wireless communication as the antenna cover moves to the partially open state and enables the wireless communication and a photographing operation executed by using the photographic lens as the antenna cover moves to the open state. The control means may enable a photographing operation executed by using the photographic lens as the antenna cover moves to the partially open state and enables the photographing operation and the wireless communication as the antenna cover moves to the open state. It is preferable that the control means turns on power to the camera in response to movement of the antenna cover from the closed state to the partially open state and turns off the power to the camera in response to movement of the antenna cover from the partially open state to the closed state.

The camera may further include a casing in which a camera main body is housed, and at which the antenna cover is movably mounted, and it is preferable that the casing and the antenna cover are both constituted of metal. It is preferable that the wireless communication means transmits through the wireless communication image data generated through a photographing operation executed at the camera.

The camera may further include a memory card receiving means in which an external storage medium is inserted, and it is preferable that the memory card receiving means is configured to receive a card having installed thereat the wireless communication means for the wireless communication. The control means may store image data generated through a photographing operation executed at the camera into a memory provided at the card at which the wireless communication means is installed.

The antenna cover may be used as a lens cover for concealing and exposing the photographic lens. It is preferable that the camera is a digital camera.

The control means may execute the photographing operation in response to a shutter release signal received through the wireless communication. The antennamaybe disposed at a position under the photographic lens.

### BRIEF DESCRIPTION OF THE DRAWINGS

FIGS. 1A and 1B are respectively a top view and a front view, both showing a camera achieved in a first embodiment with an antenna cover in a closed state;
FIGS. 2A and 2B are respectively a top view and a front view, both showing the camera in FIG. 1 with the antenna cover in an open state;
FIG. 3 is a block diagram of a control system of the camera;
FIG. 4 shows the camera achieved in a second embodiment with the antenna cover in a closed state;
FIG. 5 shows the camera in FIG. 4 with the antenna cover in a partially open state;
FIG. 6 shows the camera in FIG. 4 with the antenna cover in a fully open state;
FIG. 7 is a block diagram of the camera achieved in the second embodiment;
FIG. 8 is a front view of the camera achieved in a third embodiment;
FIG. 9 is a sectional view of the camera achieved in a fourth embodiment; and
FIG. 10 is a front view presenting an example of a camera that includes an antenna disposed under the lens.

### DESCRIPTION OF PREFERRED EMBODIMENTS

### -- First Embodiment -

The first embodiment of the present invention is now explained in reference to FIGS. 1A through 3.

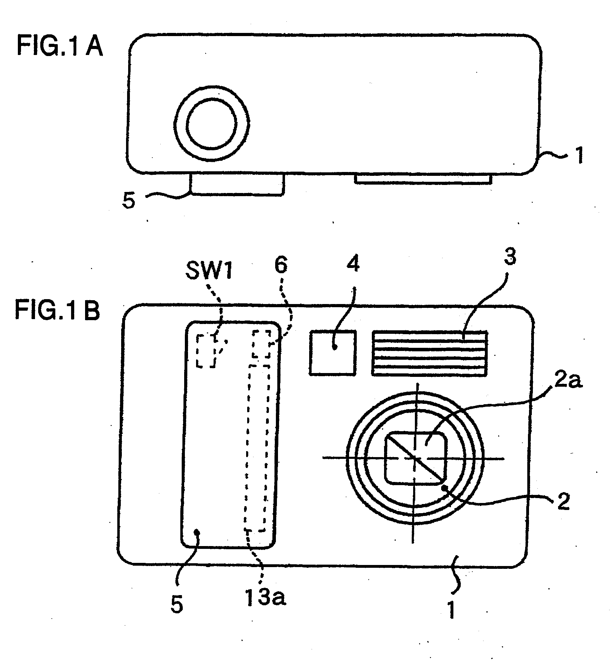

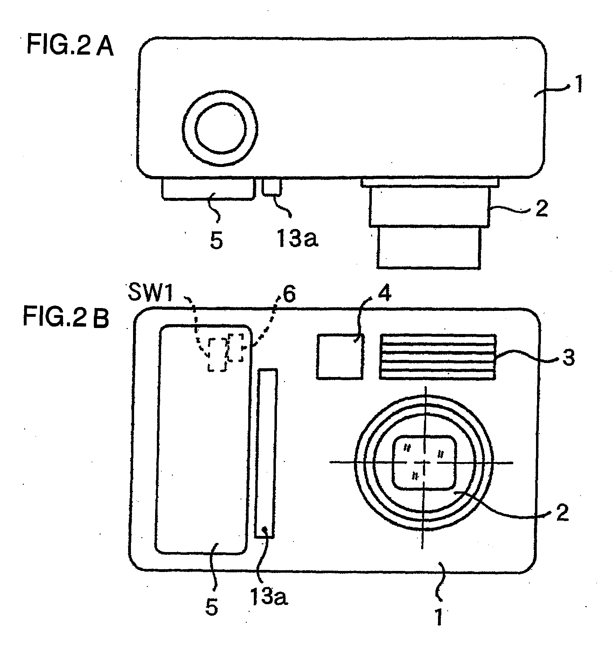

FIGS. 1A, 1B, 2A and 2B presents the external views of a digital camera achieved in the embodiment. At the front surface, i.e., the surface facing toward the subject, of a metal external cover (casing) 1 of the camera, a photographic lens barrel 2, a light emission window 3 of an electronic flash unit, a viewfinder objective window 4, an antenna 13a for wireless communication and an antenna cover 5 used to expose/conceal the antenna 13a are disposed. Reference numeral 2a indicates a lens barrier that covers the lens front surface. The antenna 13a constitutes part of a wireless communication unit preinstalled in the camera and projects out to the front beyond the external cover 1, i.e., toward the subject.

The antenna cover 5, which, as is the external cover 1, is constituted of metal, includes projections that are present at the top and bottom thereof and are engaged with upper and lower guide rails (not shown) at the external cover 1 to allow the antenna cover 5 to slide into the closed state shown in FIGS. 1A and 1B or the open state shown in FIGS. 2A and 2B. The antenna cover 5 slides to the left or to the right in FIGS. 1A and 1B and FIGS. 2A and 2B, i.e., along the longer side of the camera. The antenna cover 5 is sustained in the open state or the closed state with, for instance, a click mechanism (not shown) for maintaining a position of the antenna cover 5 and thus, the cover 5 is not allowed to close or open inadvertently even when the camera is subjected to vibration or is tilted. When the antenna cover 5 is in the closed state as shown in FIGS.1A and 1B, the antenna 13a is covered (concealed) by the cover 5, whereas the antenna 13a is exposed when the antenna cover 5 is in the open state, as shown in FIGS. 2A and 2B. In addition, a switch operation unit 6 is provided as an integrated part of the antenna cover 5 at the rear surface of the antenna cover 5, and as the antenna cover 5 enters the open state, the switch operation unit 6 turns on a power switch SW1 in the camera, and as the antenna cover 5 having been in the open state slides into the closed state, the power switch SW1 is turned off.

As described earlier, the external cover 1 and the antenna cover 5 are both constituted of metal, which improves the rigidity of the camera and gives it the appearance of a higher end product compared with cameras having resin covers.

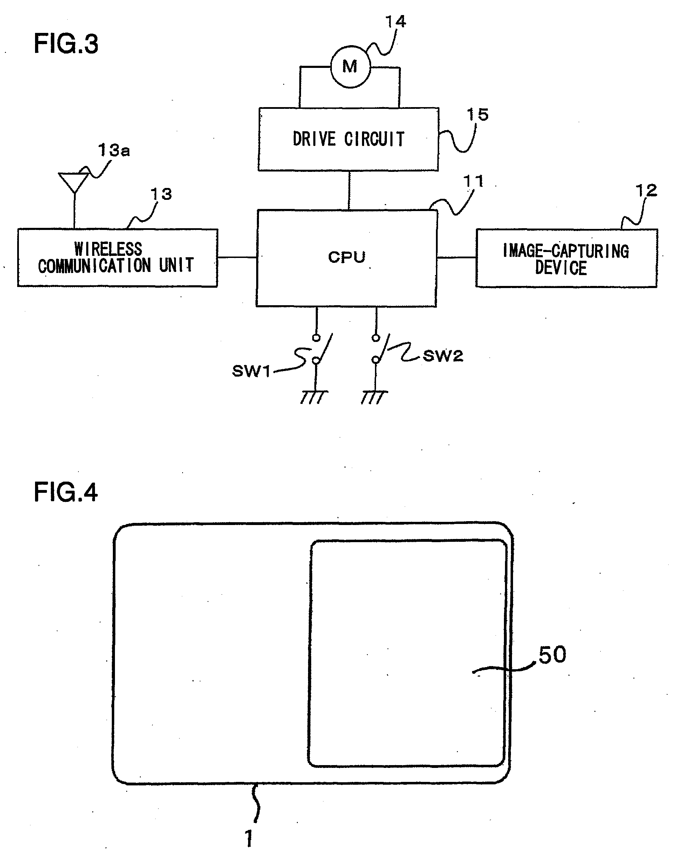

FIG. 3 is a block diagram of the essential control blocks in the camera achieved in the first embodiment. An image-capturing device 12, a wireless communication unit 13, a drive circuit 15 for a lens motor 14, the power switch SW1 and a shutter release switch SW2 are connected to a CPU 11. The CPU11, the image-capturing device 12, the wireless communication unit 13, the drive circuit 15 and the switches SW1, SW2 and the like are, that is, a camera main body is housed in the external cover 1. The image-capturing device 12, which includes an image-capturing element such as a CCD or CMOS, an image signal processing circuit, a recording circuit and the like, captures an image by interlocking with an operation of the shutter release switch SW2 and records image data thus generated into a recording medium such as a memory card.

The wireless communication unit 13 includes a communication circuit and the antenna 13a, and as a wireless communication mode is set in the camera, it transmits the image data having been generated to an external apparatus via the antenna 13a. The data recipient may be, for instance, a personal computer used by the user at home or the like. In addition, if the camera is a single lens reflex type digital camera used by a professional journalist or the like, the recipient may be a server computer installed at a base station to serve a plurality of cameras. The wireless communication may be achieved in compliance with any of a wide range of standards including a wireless LAN such as IEEE 802. 11/11b/11a/11g, and Blue-tooth (TM).

Wireless communication modes include a mode in which an image data file is transmitted each time a photograph is taken with the camera and a mode in which a specific image is selected from image data files recorded in a memory card or the like and the selected image is transmitted. Either of these modes may be made available in the camera achieved in the first embodiment, or both modes may be made available in the camera to allow the user to select a desired mode.

In order to communicate with a specific recipient, the CPU 11 detects the transmission recipient via the wireless communication unit 13 and detects whether or not the recipient is in a communication-enabled state. In response to an image transmission instruction issued by the CPU 11, the wireless communication unit 13 converts the image data originating from the camera body to a wireless signal and transmits the wireless signal via the antenna 13a.

When the antenna cover 5 is in the closed state in the camera structured as described above, the power switch SW1 is in an off state, the photographic lens 2 is at the retracted position and the lens barrier 2a is closed, as shown in FIG. 1B. Since the power is off, a photographing operation and wireless communication are naturally disabled. Since the antenna 13a is concealed by the antenna cover 5 when the camera is not in use (when the power is off), the camera has a clean, compact look and the antenna 13a will not be damaged by an external force.

As the antenna cover 5 having been in the closed state is slid into the open state, as shown in FIGS. 2A and 2B, the antenna 13a becomes exposed and the power switch SW1 is turned on to supply power to the various components of the camera. At power-on, the CPU 11 drives the motor 14 to move the lens barrel 2 having been at the retracted position to a photographing-enabled position. The lens barrier 2a opens by interlocking with this operation, and a photographing operation thereby becomes enabled. At the same time, wireless communication is enabled, and an image can be transmitted by setting a specific communication mode. Since the antenna 13a is completely exposed in this state, the optimal communication condition can be maintained and the extent of any communication problem can be minimized.

Since power is turned on by interlocking with the opening operation of the antenna cover 5 and the camera operations including the wireless communication are thus enabled as described above, the power-on operation and the cover opening operation do not need to be performed separately and the operability is improved. In addition, as the power-off state is sustained as long as the antenna cover 5 remains closed, the risk of inadvertently starting communication while the antenna cover 5 is closed, i.e., while the antenna 13a is concealed, is preempted. In the present embodiment, the camera operations include for instance a photographic operation, the wireless communication, an image reproduction, the settings of photographic condition and wireless modes, and the like.

As the antenna cover 5 is closed, the power switch SW1 is turned off. In response, the CPU 11 brings the lens barrel 2 back to the retracted position and then turns off the power. The lens barrier 2a is closed by interlocking with the retracting operation. In addition, the antenna 13a becomes concealed by the antenna cover 5.

A fairly good communication link may be assured by using a resin cover to cover the antenna 13a in conjunction with a metal external cover. Compared to a metal cover, a resin cover does not adversely affect the communication link, and thus, communication can be executed without exposing the antenna. However, a camera having one of the covers constituted of resin will lose its high-end appeal and a more reliable communication link can be maintained by exposing the antenna 13a in any case. For these reasons, the structure adopted in the embodiment, achieving good communication performance and good outward appearance, is more advantageous.

It is to be noted that the lens being driven out or retracted as the power is turned on or off does not constitute an essential requirement of the present invention.

### -- Second Embodiment -

In the second embodiment shown in FIGS. 4 through 7, a lens cover is also used as the antenna cover. It is to be noted that the same reference numerals are assigned to components similar to those in FIGS. 1A through 3.

A metal lens cover (antenna cover) 50 includes projections present at the top and the bottom thereof to engage with upper and lower guide rails (not shown) at the metal external cover 1 and is thus allowed to slide into the closed state shown in FIG. 4 or the open state shown in FIG. 6. In the closed state, the lens barrel 2, the light emission window 3, the viewfinder objective window 4, and the antenna 13a are all concealed and are thus protected from an external force. In the open state, on the other hand, the lens barrel 2, the light emission window 3, the viewfinder objective window 4 and the antenna 13a are all exposed. It is to be noted that no lens barrier is included in the structure which instead includes the lens cover 50.

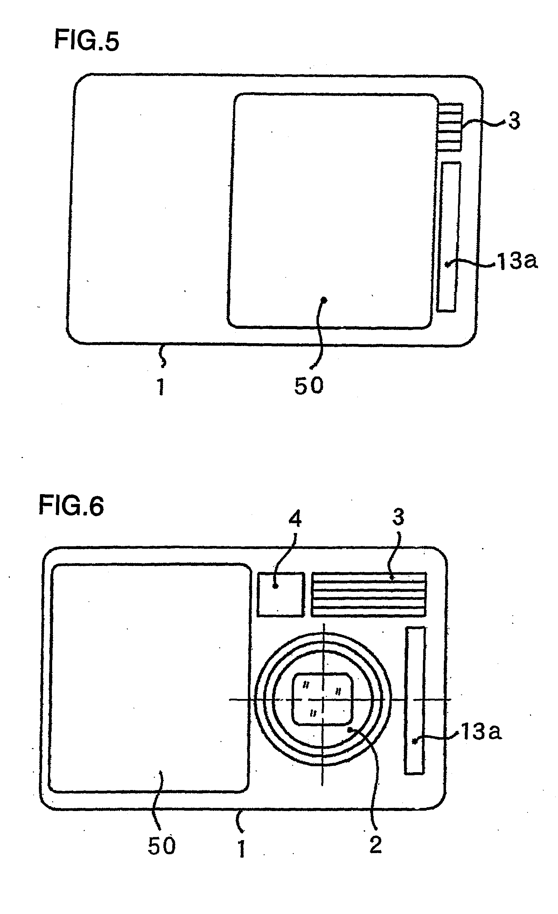

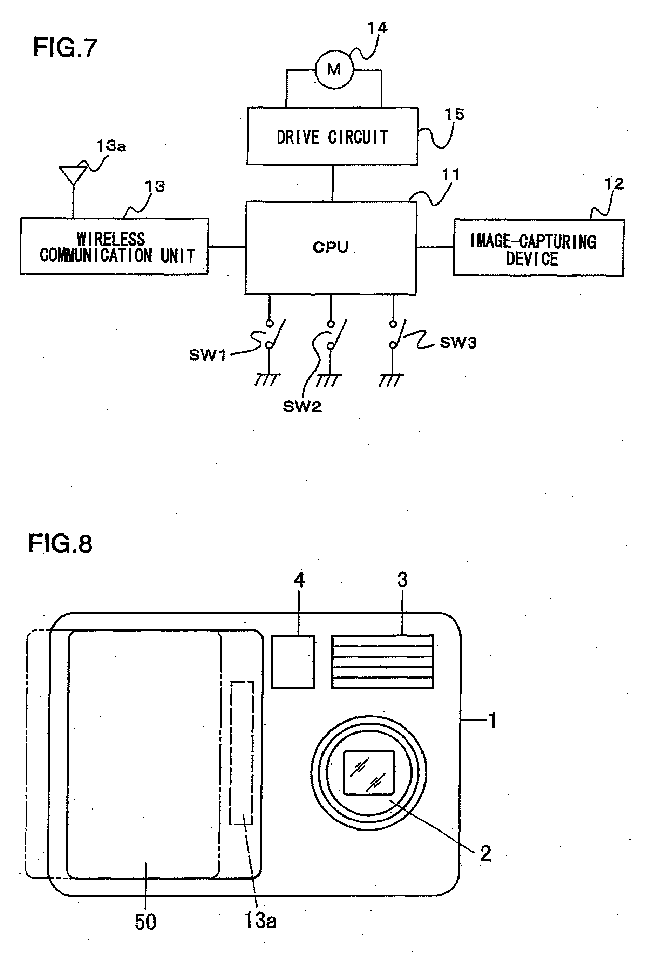

If the lens cover 50 is held in a partially open state between the open state and the closed state, as shown in FIG. 5, the antenna 13a is exposed but the lens barrel 2 remains concealed. The lens cover 50 can be held in such a partially open state, as in the open and closed states with, for instance, a click mechanism (not shown) . In the embodiment, the power switch SW1 is turned on as the lens cover having been in the closed state enters the partially open state and another switch, i.e., a detection switch SW3 (see FIG. 7) is turned on as the lens cover enters the open state (the full open state). The detection switch SW3 is turned off by interlocking with the movement of the lens cover 50 from the open state to a partially open state, whereas the power switch SW1 is turned off by interlocking with the movement of the lens cover 50 from a partially open state to the closed state.

When the lens cover 50 is in the closed state, the power is off and thus photographing operation and wireless communication are both disabled. As the lens cover 50 enters a partially open state, the power switch SW1 is turned on for power supply, but the detection switch SW3 remains in an off state. When the switches assume these states, the CPU 11 judges that the lens cover 50 is in a partially open state and, based upon this judgment, it enables wireless communication but disables photographing operation and any other operations related to photographing. Thus, even if the shutter release switch SW2 is turned on by mistake, no photographing operation is executed. This feature assuring a good communication link through the exposed antenna 13a is ideal in a situation in which wireless communication alone needs to be executed to transmit an image having already been recorded. The lens barrel 2, which is not being used, is protected by the lens cover 50 concealing it.

As the detection switch SW3 enters an on state while the power switch SW1 is in an on state, the CPU 11 judges that the lens cover 50 has entered the open state, and accordingly, it drives the lens barrel 3 from the retracted position to the photographing-enabled position, thereby enabling all the functions of the camera. Consequently, both the photographing operation and the wireless communication can be executed.

### -- Third Embodiment -

FIG. 8 shows the third embodiment. In this embodiment, too, the lens cover is also used as the antenna cover. However, unlike in the second embodiment, when the lens cover 50 is in a partially open state as indicated by the solid line, the antenna 13a remains concealed while the lens barrel 2, the light emission window 3 and the viewfinder objective window 4 become exposed. Upon detecting a partially open state based upon signals provided from the power switch SW1 and the detection switch SW3, the CPU 11 enables a photographing operation but disables wireless communication. Namely, while a photographing operation can be executed by turning on the shutter release switch SW2, the wireless communication mode cannot be set. It is to be noted that both photographing operation and wireless communication are enabled when the lens cover 50 is in the open state indicated by the two-point chain line and both photographing operation and wireless communication are disabled in the closed state (see FIG. 4), as in the second embodiment explained earlier.

This feature allows the lens cover 50 to be held in a partially open state to protect the antenna 13a when a photographing operation alone, not accompanied by wireless communication, needs to be executed.

### -- Fourth Embodiment -

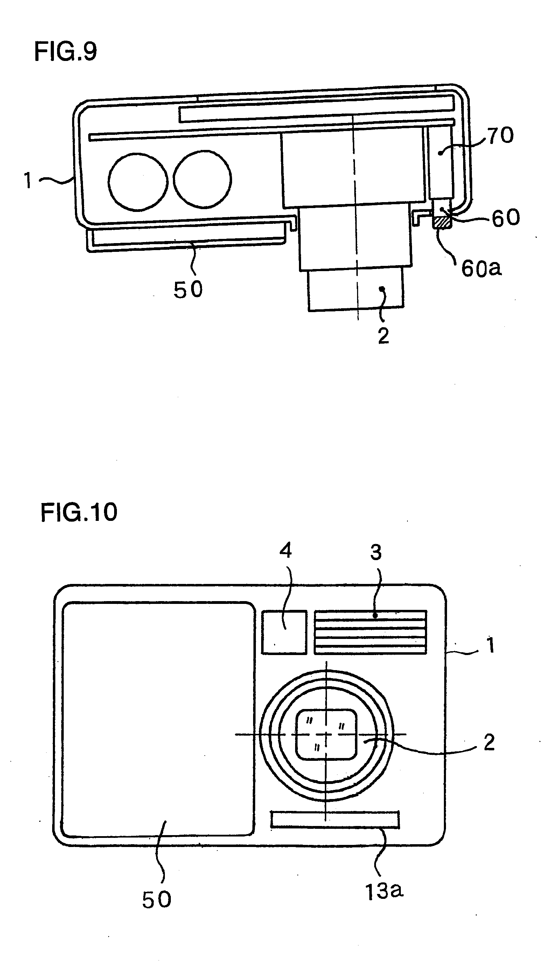

While an explanation is given above in reference to the first through third embodiments on an example in which the wireless communication unit 13 is built into the camera, a detachable wireless communication unit is mounted at the camera in the fourth embodiment shown in FIG. 9. In the embodiment, the wireless communication unit is provided in the form of a wireless communication card 60, which is loaded into a memory card slot 70 at the camera instead of an external storage medium constituted with a memory card. The memory card slot 70 is used as a memory card receiving means configured to receive the card 60 as well as the memory card. As the wireless communication card 60 is loaded into the memory card slot 70, the communication circuit unit at the wireless communication card 60 becomes electrically connected with the control circuit in the camera and, as a result, wireless communication via an antenna unit 60a is enabled. It is to be noted that a regular photographing operation can also be performed by providing a memory for image recording at the wireless communication card 60. In this case, the CPU 11 outputs a signal to store a captured subject image into the memory at the wireless communication card 60. If the wireless communication card does not include any memory, images may be recorded into an internal memory in the camera. The wireless communication card 60 may transmit either the image data stored in the memory at the wireless communication card 60 or the image data stored in the internal memory in the camera to an external apparatus via the antenna unit 60a.

Obviously, the camera may include another card slot at which the wireless communication card 60 is to be inserted in addition to the memory card slot 70 into which a memory card for recording image data and the like is loaded.

In this embodiment, too, the lens cover 50 functions as the antenna cover as well. As FIG. 9 indicates, with the antenna 60a disposed at a position substantially the same as the position of the antenna in FIG. 6, operational effects similar to those of the third embodiment can be achieved.

It is to be noted that when the lens cover is also used as the antenna cover, as in the second through fourth embodiments described above, it is not strictly necessary to detect a partially open state of the lens cover, and the power switch SW1 may be simply turned on or off as the lens cover enters the open state (full open state) or the closed state. In such a case, operations similar to those in the first embodiment are executed.

In addition, while the power to the camera is turned on/off by interlocking with the opening/closing operation of the antenna cover in the first through fourth embodiments, the antenna cover opening/closing operation and the power on/off operation do not need to interlock with each other. For instance, the first embodiment may include a separate switch for detecting the open/closed state of the antenna cover 5 in addition to the power switch, so as to disable wireless communication (while enabling a photographing operation) even in a power-on state, as long as the antenna cover 5 is detected to be in the closed state and to enable wireless communication only when the power is on and the antenna cover is detected to be in the open state.

In addition, information to be transmitted through wireless communication is not limited to images, and information indicating photographing conditions and the like under which a photographing operation has been executed at the camera or audio information may be transmitted. The present invention may also be adopted when receiving at the camera information provided by an external partner through wireless communication, e.g., when receiving a shutter release signal generated through a remote-control operation. For this reason, the present invention may be adopted in a silver halide camera as well as in a digital camera.

There are no particular restrictions to be imposed with regard to the position of the antenna 13a at the camera. The antenna 13a may be disposed at, for instance, a position under the lens, as shown in FIG. 10. Since the antenna 13a assuming such a position is less likely to be covered with a finger of the user holding the camera, the communication performance will not be compromised. Furthermore, the antenna cover does not need to be a sliding cover. Moreover, it is not strictly necessary that the external cover and the antenna cover be constituted with metal and they may instead be resin covers. Metal powder may be mixed with a resin so as to form the external cover and the antenna cover.

In the first through fourth embodiments described above, as the antenna cover 5 or 50 that is allowed to move between an open state in which the antenna 13a is exposed to the outside and a closed state in which the antenna 13a is concealed, moves to the open state, wireless communication by the wireless communication device is enabled and the wireless communication is disabled by interlocking with the movement of the antenna cover 5 or 50 to the closed state. Therefore, a reliable communication link can be assured since the wireless communication is executed with the antenna 13a in an exposed state. Since the antenna 13a can be concealed when wireless communication is not executed, the appearance of the camera is not degraded and the antenna 13a is protected from any damage from an external force. Furthermore, since wireless communication is not enabled unless the antenna 13a is exposed, the risk of executing wireless communication inadvertently while the antenna 13a is concealed, i.e., while the antenna cover 5 or 50 is closed, is eliminated.

The above described embodiments are examples and various modifications can be made without departing from the scope of the invention.

## Claims

1. A camera equipped with a wireless communication function for executing wireless communication by employing a wireless communication means which includes an antenna, comprising:
an antenna cover (5, 50) that moves to one of an open state in which the antenna (13a, 60a) is exposed to an outside and a closed state in which the antenna (13a, 60a) is concealed; and
a control means (11) for enabling the wireless communication by the wireless communication means in response to movement of the antenna cover (5, 50) to the open state and disabling the wireless communication in response to movement of the antenna cover (5, 50) to the closed state.

2. A camera equipped with a wireless communication function according to claim 1, further comprising:
a photographic lens (2), wherein:
when the antenna cover (5, 50) is in the open state, the antenna (13a, 60a) and the photographic lens (2) are exposed, whereas when the antenna cover (13a, 60a) is in the closed state, the antenna (13a, 60a) and the photographic lens (2) are concealed.

3. A camera equipped with a wireless communication function according to claim 2, wherein:
the control means (11) turns on power to the camera in response to the movement of the antenna cover (5, 50) into the open state so as to enable a photographing operation executed by using the photographic lens (2) in addition to the wireless communication, and the control means (11) turns off the power to the camera in response to the movement of the antenna cover (5, 50) into the closed state so as to disable the wireless communication and the photographing operation.

4. A camera equipped with a wireless communication function according to claim 2, wherein:
the antenna cover (50) moves to a partially open state in which the antenna (13a) is exposed while the photographic lens (2) remains concealed, between the open state and the closed state; and
the control means (11) enables the wireless communication as the antenna cover (50) moves to the partially open state and enables the wireless communication and a photographing operation executed by using the photographic lens (2) as the antenna cover (50) moves to the open state.

5. A camera equipped with a wireless communication function according to claim 2, wherein:
the antenna cover (50) moves to a partially open state in which the photographic lens (2) is exposed while the antenna (13a) remains concealed, between the open state and the closed state; and
the control means (11) enables a photographing operation executed by using the photographic lens (2) as the antenna cover (50) moves to the partially open state and enables the photographing operation and the wireless communication as the antenna cover (50) moves to the open state.

6. A camera equipped with a wireless communication function according to claim 4 or claim 5, wherein:
the control means (11) turns on power to the camera in response to movement of the antenna cover (50) from the closed state to the partially open state and turns off the power to the camera in response to movement of the antenna cover (50) from the partially open state to the closed state.

7. A camera equipped with a wireless communication function according to any one of claim 1 through claim 6, further comprising:
a casing (1) in which a camera main body is housed, and at which the antenna cover (5, 50) is movably mounted, wherein:
the casing (1) and the antenna cover (5, 50) are both constituted of metal.

8. A camera equipped with a wireless communication function according to any one of claim 1 through claim 7, wherein:
the wireless communication means transmits through the wireless communication image data generated through a photographing operation executed at the camera.

9. A camera equipped with a wireless communication function according to any one of claim 1 through claim 8, further comprising:
a memory card receiving means (70) in which an external storage medium is inserted, wherein:
the memory card receiving means (70) is configured to receive a card having installed thereat the wireless communication means for the wireless communication.

10. A camera equipped with a wireless communication function according to claim 9, wherein:
the control means (11) stores image data generated through a photographing operation executed at the camera into a memory provided at the card at which the wireless communication means is installed.

11. A camera equipped with a wireless communication function according to any one of claim 2 through claim 6, wherein:
the antenna cover (50) is used as a lens cover for concealing and exposing the photographic lens (2).

12. A camera equipped with a wireless communication function according to any one of claim 1 through claim 11, wherein:
the camera is a digital camera.

13. A camera equipped with a wireless communication function according to claim 3, wherein:
the control means (11) executes the photographing operation in response to a shutter release signal received through the wireless communication.

14. A camera equipped with a wireless communication function according to any one of claim 2 through claim 6, wherein:
the antenna (13a) is disposed at a position under the photographic lens (2).
